# EUROPÄISCHE PATENTSCHRIFT

(11) **EP 3 224 824 B1**
(45) Veröffentlichungstag und Bekanntmachung des Hinweises auf die Patenterteilung: **06.07.2022**
(21) Anmeldenummer: 15787170.8
(22) Anmeldetag: 22.10.2015
(51) Int. Cl.: G08G 1/16, G05D 1/02, G09B 29/00, G09B 29/10, G01C 21/32, G08G 1/14, B60W 30/06, B62D 15/02, G06Q 90/00

(54) **VERFAHREN UND VORRICHTUNG ZUM BETREIBEN EINES FAHRZEUGS RESPEKTIVE EINES PARKPLATZES**
METHOD AND DEVICE FOR OPERATING A VEHICLE WITH RESPECT TO A PARKING SPACE
PROCÉDÉ ET DISPOSITIF D'EXPLOITATION D'UN VÉHICULE RESPECTIVEMENT D'UNE AIRE DE STATIONNEMENT

(30) Priorität: 26.11.2014 DE 102014224104
(43) Veröffentlichungstag der Anmeldung: 04.10.2017
(73) Patentinhaber: Robert Bosch GmbH, 70442 Stuttgart (DE)
(72) Erfinder: NORDBRUCH, Stefan, 70806 Kornwestheim (DE)
(86) Internationale Anmeldenummer: PCT/EP2015/074483
(87) Internationale Veröffentlichungsnummer: WO 2016/083035

(56) Entgegenhaltungen:
- DE-A1-102009 029 117
- DE-A1-102012 015 968
- DE-A1-102012 021 282
- DE-A1-102012 222 562
- US-A1- 2001 019 309
- US-A1- 2010 100 324
- IBISCH ANDRE ET AL: "Towards highly automated driving in a parking garage: General object localization and tracking using an environment-embedded camera system", 2014 IEEE INTELLIGENT VEHICLES SYMPOSIUM PROCEEDINGS, IEEE, 8. Juni 2014 (2014-06-08), Seiten 426-431, XP032620322, DOI: 10.1109/IVS.2014.6856567 [gefunden am 2014-07-15]

## Beschreibung

Die Erfindung betrifft ein Verfahren und eine Vorrichtung zum Betreiben eines Fahrzeugs. Die Erfindung betrifft ferner eine Vorrichtung und ein Verfahren zum Betreiben eines Parkplatzes. Die Erfindung betrifft ferner ein Computerprogramm.

### Stand der Technik

Die Offenlegungsschrift DE 10 2009 029 117 A1 zeigt ein Verfahren zum Unterstützen eines Fahrbetriebs eines Kraftfahrzeugs sowie eine Fahrerassistenzvorrichtung.

Die Offenlegungsschrift DE 10 2012 021 282 A1 zeigt ein Verfahren zur Koordination des Betriebs von vollautomatisiert fahrenden Kraftfahrzeugen.

Die Offenlegungsschrift DE 10 2012 222 562 A1 zeigt ein System für bewirtschaftete Parkflächen zur Überführung eines Fahrzeugs von einer Startposition in eine Zielposition.

Für eine autonome Navigation des Fahrzeugs von der Startposition zu der Zielposition ist es in der Regel wichtig, dass das Fahrzeug mobile Objekte oder Hindernisse, die sich in seinem Umfeld befinden, erkennt. Solche mobilen oder dynamischen Objekte können zwar von einer fahrzeug- oder bordeigenen Umfeldsensorik detektiert werden. Dennoch sind einige dynamische Objekte, wie zum Beispiel ein zwischen zwei parkenden Fahrzeugen herauslaufendes Kind, allerdings nur schwer und/oder spät von den Sensoren der Umfeldsensorik zu erfassen.

Es besteht daher ein Bedarf, diese Problematik zu lösen.

### Offenbarung der Erfindung

Die der Erfindung zugrunde liegende Aufgabe kann daher darin gesehen werden, ein Verfahren zum Betreiben eines Fahrzeugs bereitzustellen, welches es ermöglicht, dass ein Kollisionsrisiko des Fahrzeugs mit mobilen Objekten, die sich auf einem Parkplatz befinden, während das Fahrzeug autonom auf dem Parkplatz navigiert, zu verringern oder sogar zu vermeiden.

Die der Erfindung zugrunde liegende Aufgabe kann auch darin gesehen werden, eine entsprechende Vorrichtung zum Betreiben eines Fahrzeugs bereitzustellen.

Die der Erfindung zugrunde liegende Aufgabe kann des Weiteren darin gesehen werden, ein Verfahren zum Betreiben eines Parkplatzes bereitzustellen.

Die der Erfindung zugrunde liegende Aufgabe kann darin gesehen werden, eine entsprechende Vorrichtung zum Betreiben eines Parkplatzes bereitzustellen.

Die der Erfindung zugrunde liegende Aufgabe kann auch darin gesehen werden, ein entsprechendes Computerprogramm bereitzustellen.

Diese Aufgaben werden mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt ist ein Parksystem für Fahrzeuge vorgesehen, wobei das Parksystem einen Parkplatz und die Vorrichtung zum Betreiben eines Parkplatzes umfasst.

Die Erfindung umfasst also insbesondere und unter anderem den Gedanken, Positionsdaten, die mobilen Objekten innerhalb des Parkplatzes zugeordnet sind, an das Fahrzeug und/oder an einen Teilnehmer des Kommunikationsnetzwerks zu senden. Basierend auf der Kenntnis, wo sich mobile Objekte innerhalb des Parkplatzes befinden, kann eine autonome Navigation des Fahrzeugs effizient und sicher durchgeführt werden. So können bei der autonomen Navigation auch solche mobilen oder dynamischen Objekte berücksichtigt werden, die für einen Umfeldsensor einer Umfeldsensorik des Fahrzeugs nur schwer und/oder zu spät oder gar nicht detektiert werden können. Dadurch wird in vorteilhafter Weise ein Kollisionsrisiko des Fahrzeugs mit mobilen Objekten, die sich auf oder innerhalb des Parkplatzes befinden, verringert oder sogar ganz vermieden.

Ein mobiles Objekt im Sinne der vorliegenden Erfindung kann auch als ein dynamisches Objekt bezeichnet werden. Ein stationäres Objekt im Sinne der vorliegenden Erfindung kann auch als ein statisches Objekt bezeichnet werden. Statische Objekte sind beispielsweise Teil einer Infrastruktur des Parkplatzes. Solch eine Infrastruktur umfasst beispielsweise eine Schranke, ein Gebäude, einen Pfeiler oder Bordsteinkanten. Mobile oder dynamische Objekte sind beispielsweise Personen, Tiere oder weitere Fahrzeuge, die sich auf oder innerhalb des Parkplatzes bewegen. Zum Beispiel wird ein abgestelltes oder ein geparktes Fahrzeug als ein mobiles Objekt definiert, obwohl es sich nicht bewegt. Denn es weist eine Geschwindigkeit auf, die während des Parkens 0 m/s beträgt. Obwohl eine Infrastruktur des Parkplatzes ebenfalls eine Geschwindigkeit von 0 m/s aufweist, wird diese Infrastruktur nicht als ein mobiles Objekt definiert, sondern als ein statisches Objekt. Denn ein Fahrzeug kann eine Geschwindigkeit größer 0 m/s aufweisen, sich also bewegen. Dies kann die Infrastruktur des Parkplatzes nicht. Daher ist zum Beispiel vorgesehen, dass die statischen Objekte ausschließlich die Infrastruktur des Parkplatzes umfassen.

Das heißt, dass ein mobiles Objekt ein Objekt bezeichnet, welches sich bewegen oder fortbewegen kann, also beweglich ist. Ein Objekt muss sich also nicht zwangsläufig bewegen, um als mobiles Objekt definiert oder klassifiziert zu werden. Im Gegensatz dazu bezeichnet ein statisches Objekt ein Objekt, welches sich nicht bewegen kann, also nicht beweglich ist.

Ein Parkplatz im Sinne der vorliegenden Erfindung kann auch als eine Parkfläche bezeichnet werden und dient als Abstellfläche für Fahrzeuge. Der Parkplatz bildet somit insbesondere eine zusammenhängende Fläche, die mehrere Stellplätze (bei einem Parkplatz auf privaten Grund) oder Parkstände (bei einem Parkplatz auf öffentlichen Grund) aufweist. Der Parkplatz kann nach einer Ausführungsform von einem Parkhaus umfasst sein. Insbesondere ist der Parkplatz von einer Garage umfasst.

Bei einem vollautomatisierten oder vollautomatischen (autonomen) Valet-Parking wird ein Fahrzeug von seinem Fahrer auf eine Abgabestelle oder Abgabeposition, zum Beispiel vor einem Parkhaus, geparkt und von da fährt das Fahrzeug selbst, also autonom, oder ferngesteuert in eine Parkposition oder in eine Parkbucht und von dort wieder zurück zu der Abgabestelle. Der Fahrer muss hierbei nicht im Fahrzeug bleiben, kann dies jedoch tun.

Autonom im Sinne der vorliegenden Erfindung bedeutet insbesondere, dass das Fahrzeug selbständig, also ohne einen Eingriff eines Fahrers, navigiert. Das Fahrzeug fährt also selbständig oder autonom auf den Parkplatz, ohne dass ein Fahrer hierfür das Fahrzeug steuern müsste. Der Fahrer muss selbst nicht mehr im Fahrzeug bleiben. Das heißt also insbesondere, dass das Fahrzeug eine Führungseinrichtung für die Navigation des Fahrzeugs umfasst, die eingerichtet ist, das Fahrzeug autonom auf den Parkplatz zu führen oder zu steuern. Ein Führen oder ein Steuern umfasst insbesondere eine Quer- und/oder eine Längsführung oder Steuerung des Fahrzeugs. Ein solch autonom fahrendes Fahrzeug, das automatisch Ein- und Ausparken kann, wird beispielsweise als ein AVP-Fahrzeug bezeichnet. AVP steht für "Automatic Valet Parking" und kann mit "automatischer Parkvorgang" übersetzt werden.

Nach einer Ausführungsform ist das Fahrzeug ein AVP-Fahrzeug.

Nach einer weiteren Ausführungsform umfasst das Kommunikationsnetzwerk ein WLAN-Netzwerk und/oder ein Mobilfunknetzwerk.

Eine Abgabeposition oder eine Abgabestelle im Sinne der vorliegenden Erfindung ist eine Position, an welcher ein Fahrer des Fahrzeugs sein Fahrzeug für einen autonomen oder ferngesteuerten Parkvorgang abstellen kann und von dieser sein Fahrzeug zu einem späteren Zeitpunkt wieder abholen kann.

Eine Parkposition im Sinne der vorliegenden Erfindung ist eine Position, an welcher das Fahrzeug autonom parken soll. Eine Parkposition umfasst beispielsweise eine Parkbucht.

In einer Ausführungsform ist vorgesehen, dass das Fahrzeug autonom oder ferngesteuert von der Abgabeposition zu der Parkposition navigiert.

In einer weiteren Ausführungsform ist vorgesehen, dass das Fahrzeug autonom in die Parkposition einparkt oder ferngesteuert in die Parkposition eingeparkt wird.

Nach einer anderen Ausführungsform ist vorgesehen, dass das Fahrzeug autonom oder ferngesteuert aus der Parkposition ausparkt.

In einer weiteren Ausführungsform ist vorgesehen, dass das Fahrzeug autonom oder ferngesteuert von der Parkposition zu der Abgabeposition navigiert oder fährt oder ferngesteuert fährt.

Nach einer Ausführungsform ist die Kommunikation über das Kommunikationsnetzwerk verschlüsselt.

Nach einer Ausführungsform ist vorgesehen, dass dem oder den mobilen Objekten zugeordnete Prädiktionsdaten von zukünftigen Bewegungen des oder der mobilen Objekte vom Fahrzeug über das Kommunikationsnetzwerk empfangen werden, so dass das Fahrzeug basierend auf den zukünftigen Bewegungen des oder der mobilen Objekte auf dem Parkplatz autonom navigiert.

Dadurch wird insbesondere der technische Vorteil bewirkt, dass eine verbesserte und effizientere Navigation des Fahrzeugs auf dem Parkplatz ermöglicht ist. Denn nun können auch zukünftige Bewegungen der mobilen Objekte für die Navigation, also insbesondere für die Routenplanung, berücksichtigt werden. Dies kann in vorteilhafter Weise ein Kollisionsrisiko mit den mobilen Objekten verringern oder sogar ganz vermeiden.

Gemäß einer weiteren Ausführungsform ist vorgesehen, dass das Fahrzeug sein Umfeld sensorisch erfasst und bei einer Detektion eines mobilen Objekts basierend auf der sensorischen Erfassung eine Position des mobilen Objekts bestimmt und der Position entsprechende Positionsdaten über das Kommunikationsnetzwerk an einen Teilnehmer des Kommunikationsnetzwerks sendet.

Dadurch wird insbesondere der technische Vorteil bewirkt, dass der Teilnehmer des Kommunikationsnetzwerks Kenntnis darüber erlangt, wo sich mobile Objekte auf dem oder innerhalb des Parkplatzes befinden. Entsprechend kann dann der Teilnehmer des Kommunikationsnetzwerks seine autonome Navigation auf oder innerhalb des Parkplatzes anpassen. Dies kann in vorteilhafter Weise ein Kollisionsrisiko des Teilnehmers mit mobilen Objekten, die sich in seinem Umfeld befinden, verringern oder sogar ganz vermeiden.

In einer anderen Ausführungsform ist vorgesehen, dass das Fahrzeug während seiner Navigation auf dem Parkplatz seiner momentanen Position entsprechende Positionsdaten über das Kommunikationsnetzwerk an einen Teilnehmer des Kommunikationsnetzwerks sendet.

Dadurch wird insbesondere der technische Vorteil bewirkt, dass der Teilnehmer Kenntnis darüber erlangt, wo sich das Fahrzeug während der Navigation des Fahrzeugs auf dem Parkplatz befindet. Entsprechend kann dann dieser Teilnehmer seine Navigation auf dem Parkplatz anpassen. Auch dies kann in vorteilhafter ein Kollisionsrisiko verringern.

In einer anderen Ausführungsform ist vorgesehen, dass das Fahrzeug während seiner Navigation auf dem Parkplatz seiner geplanten Route entsprechende Routendaten über das Kommunikationsnetzwerk an einen Teilnehmer des Kommunikationsnetzwerks sendet.

Dadurch wird insbesondere der technische Vorteil bewirkt, dass der Teilnehmer Kenntnis darüber erlangt, welche Route das Fahrzeug im Rahmen der Navigation geplant hat und somit auch nehmen wird. Diese Route ist also eine Solltrajektorie, die das Fahrzeug abfahren will. Entsprechend kann dann der Teilnehmer seine Navigation auf dem Parkplatz anpassen. Dies kann in vorteilhafter Weise ein Kollisionsrisiko verringern.

Ein Teilnehmer im Sinne der vorliegenden Erfindung ist insbesondere das Fahrzeug selbst oder ein weiteres Fahrzeug oder die Vorrichtung zum Betreiben eines Fahrzeugs oder die Vorrichtung zum Betreiben eines Parkplatzes. Der Teilnehmer ist insbesondere ein Endgerät, vorzugsweise ein mobiles Endgerät. Das Endgerät ist beispielsweise im Fahrzeug eingebaut. Vorzugsweise sind mehrere Teilnehmer vorgesehen, die beispielsweise gleich oder unterschiedlich gebildet sind.

In einer anderen Ausführungsform ist vorgesehen, dass die dem oder den mobilen Objekten zugeordnete Daten von einer dynamischen Schicht der digitalen Karte umfasst sind, wobei die digitale Karte auch eine statische Schicht aufweist, die Positionsdaten von einem oder mehreren sich innerhalb des Parkplatzes befindenden stationären Objekten umfasst.

Das heißt also, dass die digitale Karte eine statische und eine dynamische Schicht aufweist. Die statische Schicht umfasst die statischen Anteile einer digitalen Karte, also hier insbesondere die stationären Objekte, also insbesondere Informationen über diese stationären Objekte. Solche Informationen sind beispielsweise Positionen und/oder Abmaßungen oder Abmessungen der stationären Objekte. Die dynamische Schicht der digitalen Karte umfasst insbesondere die dynamischen oder mobilen Anteile der digitalen Karte, also hier insbesondere die mobilen Objekte, also Informationen über die mobilen Objekte. Informationen über die mobilen Objekte umfassen beispielsweise Positionen, zukünftige Routen oder Bewegungen der mobilen Objekte und/oder Typ (Fahrzeug, Person, Tier, ...) des oder der mobilen Objekte. Durch das Aufteilen der digitalen Karte in eine dynamische und in eine statische Schicht, kann in vorteilhafter Weise bei einer Änderung der mobilen Objekte nur die dynamische Schicht an das Fahrzeug übertragen oder gesendet werden, also allgemein an den Teilnehmer des Kommunikationsnetzwerks. Die statische Schicht, die sich in der Regel im Laufe der Navigation nicht ändern wird, muss nicht noch einmal an den Teilnehmer, insbesondere an das Fahrzeug, gesendet werden. Dies reduziert in vorteilhafter Weise ein zu übertragendes Datenvolumen. Dadurch kann in vorteilhafter Weise eine Übertragungsbandbreite oder eine Übertragungskapazität des Kommunikationsnetzwerks effizient genutzt werden.

In einer dazu alternativen Ausführungsform, die nicht durch die beanspruchte Erfindung abgedeckt ist, ist vorgesehen, dass die dem oder den mobilen Objekten zugeordnete Daten von einer weiteren digitalen Karte umfasst sind, wobei die digitale Karte Positionsdaten von einem oder mehreren sich innerhalb des Parkplatzes befindenden stationären Objekten umfasst.

Das heißt also, dass gemäß dieser alternativen Ausführungsform zwei digitale Karten vorgesehen sind: die digitale Karte umfassend Informationen, insbesondere Positionsdaten, der stationären Objekte und die weitere digitale Karte, die Informationen, insbesondere die Positionsdaten, der mobilen Objekte umfasst. Auch hier muss lediglich die digitale Karte umfassend die stationären oder statischen Anteile nur einmal an das Fahrzeug, insbesondere allgemein an den Teilnehmer, gesendet werden. Die weitere digitale Karte umfassend die dynamischen Anteile kann bei Bedarf, also insbesondere bei einer Änderung betreffend den mobilen Objekten, erneut an den Teilnehmer, insbesondere an das Fahrzeug, gesendet werden. Auch diese reduziert in vorteilhafter Weise ein zu übertragendes Datenvolumen. Insbesondere wird eine Übertragungskapazität und/oder eine Übertragungsbandbreite des Kommunikationsnetzwerks besonders effizient genutzt.

Nach einer weiteren alternativen Ausführungsform, die nicht durch die beanspruchte Erfindung abgedeckt ist, ist vorgesehen, dass es ausschließlich eine digitale Karte umfassend eine einzige Schicht gibt, die sowohl die dynamischen Anteile als auch die statischen Anteile umfasst. Das heißt, dass nach einer alternativen Ausführungsform vorgesehen ist, dass die digitale Karte eine einzige Schicht umfasst, welche die dem oder den mobilen Objekten zugeordnete Daten und die Positionsdaten von einem oder mehreren sich innerhalb des Parkplatzes befindenden stationären Objekten aufweist.

In einer Ausführungsform ist vorgesehen, dass die dynamische Schicht mehrere dynamische Subschichten umfasst (also insbesondere in mehrere dynamische Subschichten aufgeteilt ist), wobei eine der Subschichten Daten umfasst, die mobilen Objekten mit einer Geschwindigkeit von 0 m/s zugeordnet sind (zum Beispiel geparkte oder abgestellte Fahrzeuge), wobei eine andere der Subschichten Daten umfasst, die mobilen Objekten mit einer Geschwindigkeit größer 0 m/s zugeordnet sind (zum Beispiel sich bewegende Objekte). Dadurch kann in vorteilhafter Weise eine Effizienz bei der Datenübertragung noch weiter gesteigert werden.

In einer anderen Ausführungsform ist vorgesehen, dass eine Umfeldsensorik vorgesehen ist, insbesondere ist die Umfeldsensorik von der Vorrichtung zum Betreiben eines Fahrzeugs, insbesondere von einem Fahrzeug, umfasst.

Die Umfeldsensorik umfasst nach einer Ausführungsform einen oder mehrere Umfeldsensoren. Ein Umfeldsensor ist beispielsweise ein Radarsensor, ein Ultraschallsensor, ein Lidarsensor, ein Lasersensor oder ein Videosensor.

Nach einer Ausführungsform ist vorgesehen, dass eine Umfeldsensorik zum sensorischen Erfassen eines Fahrzeugumfelds und ein Prozessor vorgesehen sind, der ausgebildet ist, basierend auf der sensorischen Erfassung ein mobiles Objekt im Fahrzeugumfeld zu detektieren, eine Position des mobilen Objekts zu bestimmen und der Position entsprechende Positionsdaten zu ermitteln, wobei die Kommunikationsschnittstelle ausgebildet ist, die Positionsdaten über das Kommunikationsnetzwerk an einen Teilnehmer des Kommunikationsnetzwerks zu senden.

Dadurch wird insbesondere der technische Vorteil bewirkt, dass Teilnehmer des Kommunikationsnetzwerks Kenntnis darüber erlangen, wo sich mobile Objekte auf dem Parkplatz befinden. Dass der Prozessor ausgebildet ist, basierend auf der sensorischen Erfassung ein mobiles Objekt im Fahrzeugumfeld zu detektieren, bedeutet insbesondere, dass die Umfeldsensorik entsprechend der sensorischen Erfassung Umfeldsensordaten bereitstellt, die der Prozessor entsprechend verarbeitet, um in diesen Umfeldsensordaten einen oder mehrere mobile Objekte zu detektieren und entsprechende Positionen zu bestimmen.

Wenn im Sinne der vorliegenden Beschreibung der Singular für den Begriff "Objekt" verwendet wird, so soll stets der Plural und umgekehrt mitgelesen werden.

Nach einer Ausführungsform ist vorgesehen, dass der Prozessor ferner ausgebildet ist, basierend auf der sensorischen Erfassung eine zukünftige Bewegung des mobilen Objekts zu prädizieren und der Prädiktion entsprechende Prädiktionsdaten zu ermitteln, wobei die Kommunikationsschnittstelle ausgebildet ist, die Prädiktionsdaten über das Kommunikationsnetzwerk an einen Teilnehmer des Kommunikationsnetzwerks zu senden.

Dadurch wird insbesondere der technische Vorteil bewirkt, dass Teilnehmer des Kommunikationsnetzwerks Kenntnis darüber erlangen, wie die zukünftige Bewegung des mobilen Objekts aussehen könnte.

Nach einer weiteren Ausführungsform ist vorgesehen, dass der Prozessor ausgebildet ist, basierend auf der Überwachung eine zukünftige Bewegung des oder der mobilen Objekte zu prädizieren und der Prädiktion entsprechende Prädiktionsdaten zu ermitteln, wobei die Kommunikationsschnittstelle ausgebildet ist, die Prädiktionsdaten über das Kommunikationsnetzwerk an den Teilnehmer des Kommunikationsnetzwerks zu senden.

Gemäß einer weiteren Ausführungsform ist vorgesehen, dass der Prozessor ausgebildet ist, die dem oder den mobilen Objekten zugeordnete Daten als dynamische Schicht in die digitale Karte zu integrieren, wobei die digitale Karte eine statische Schicht aufweist, die Positionsdaten von einem oder mehreren sich innerhalb des Parkplatzes befindenden stationären Objekten umfasst, wobei die Kommunikationsschnittstelle ausgebildet ist, die dynamische Schicht getrennt von der statischen Schicht über das Kommunikationsnetzwerk an den Teilnehmer des Kommunikationsnetzwerks zu senden.

Nach einer alternativen Ausführungsform ist vorgesehen, dass der Prozessor ausgebildet ist, basierend auf den dem oder den mobilen Objekten zugeordnete Daten eine weitere digitale Karte zu erstellen, wobei die digitale Karte Positionsdaten von einem oder mehreren sich innerhalb des Parkplatzes befindenden stationären Objekten umfasst, wobei die Kommunikationsschnittstelle ausgebildet ist, die weitere separate Karte über das Kommunikationsnetzwerk an den Teilnehmer zu senden.

Die beiden vorstehend genannten Ausführungsformen, die alternativ zueinander sind, weisen analoge Vorteile auf, wie sie bereits vorstehend erläutert wurden.

Gemäß einer weiteren Ausführungsform ist vorgesehen, dass die Kommunikationsschnittstelle ausgebildet ist, während einer autonomen Navigation eines den Teilnehmer des Kommunikationsnetzwerks umfassenden Fahrzeugs auf dem Parkplatz ausschließlich dem oder den mobilen Objekten zugeordnete Daten an den Teilnehmer über das Kommunikationsnetzwerk zu senden.

Dadurch wird insbesondere der technische Vorteil bewirkt, dass aufgrund der ausschließlichen Übertragung der den mobilen Objekten zugeordnete Daten an den Teilnehmer, insbesondere das Fahrzeug, eine Bandbreite und/oder eine Übertragungskapazität des Kommunikationsnetzwerks besonders effizient genutzt werden können. Insbesondere kann dadurch ein zu übertragendes Datenvolumen reduziert oder verringert werden.

Die den mobilen Objekten zugeordnete Daten umfassen insbesondere die Positionsdaten und/oder die Prädiktionsdaten.

Funktionalitäten der Verfahren ergeben sich analog aus entsprechenden Funktionalitäten der Vorrichtungen und umgekehrt. Das heißt also insbesondere, dass entsprechende Vorrichtungsmerkmale sich analog aus entsprechenden Verfahrensmerkmalen ergeben und umgekehrt.

Nach einer Ausführungsform ist die Vorrichtung zum Betreiben eines Parkplatzes ausgebildet oder eingerichtet, das Verfahren zum Betreiben eines Parkplatzes aus- oder durchzuführen.

In einer anderen Ausführungsform ist vorgesehen, dass die Vorrichtung zum Betreiben eines Fahrzeugs ausgebildet oder eingerichtet ist, das Verfahren zum Betreiben eines Fahrzeugs auszuführen oder durchzuführen.

Nach einem weiteren Aspekt ist ein Fahrzeug bereitgestellt, welches ausgebildet oder eingerichtet ist, das Verfahren zum Betreiben eines Fahrzeugs aus- oder durchzuführen. Das Fahrzeug umfasst nach einer Ausführungsform die Vorrichtung zum Betreiben eines Fahrzeugs.

Nach einer Ausführungsform umfasst die fahrzeugexterne Überwachungseinrichtung einen oder mehrere der folgenden Sensoren: Videosensor, Radarsensor, Ultraschallsensor, Lidarsensor und Lasersensor. Insbesondere umfasst die fahrzeugexterne Überwachungseinrichtung eine oder mehrere Lichtschranken und/oder Parkbucht- oder Parkposition-Belegt-Sensoren.

Die Erfindung wird im Folgenden anhand von bevorzugten Ausführungsbeispielen näher erläutert. Hierbei zeigen
- Fig. 1: ein Ablaufdiagramm eines Verfahrens zum Betreiben eines Fahrzeugs,
- Fig. 2: eine Vorrichtung zum Betreiben eines Fahrzeugs,
- Fig. 3: eine Vorrichtung zum Betreiben eines Parkplatzes und
- Fig. 4: ein Verfahren zum Betreiben eines Parkplatzes.

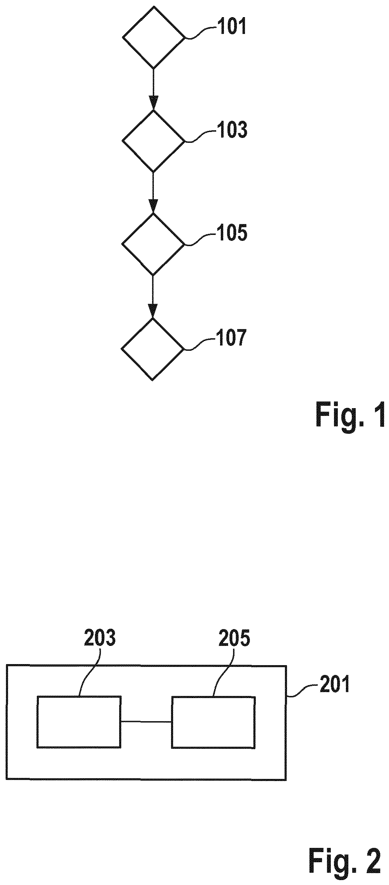

Fig. 1 zeigt ein Ablaufdiagramm eines Verfahrens zum Betreiben eines Fahrzeugs.

In einem Schritt 101 ist vorgesehen, dass eine digitale Karte eines Parkplatzes und zumindest eine Zielposition auf dem Parkplatz vom Fahrzeug über ein Kommunikationsnetzwerk empfangen werden. Gemäß einem Schritt 103 ist vorgesehen, dass Positionsdaten von einem oder mehreren sich innerhalb des Parkplatzes befindenden mobilen Objekten vom Fahrzeug über das Kommunikationsnetzwerk empfangen werden. Das heißt also, dass das Fahrzeug die Positionen der mobilen Objekte, die sich innerhalb des Parkplatzes befinden, empfängt.

In einem Schritt 105 ist vorgesehen, dass das Fahrzeug autonom auf dem Parkplatz, basierend auf der digitalen Karte und auf den Positionsdaten des einen oder der mehreren mobilen Objekte, zu der Zielposition navigiert. Gemäß einem Schritt 107 stellt sich das Fahrzeug autonom an der Zielposition ab.

Nach einer Ausführungsform ist die Zielposition eine Parkposition.

Nach einer Ausführungsform fährt das Fahrzeug von einer Abgabeposition zu der Zielposition.

In einer weiteren Ausführungsform fährt das Fahrzeug von der Zielposition zurück zu der Abgabeposition.

Allgemein navigiert das Fahrzeug autonom auf dem Parkplatz basierend auf der digitalen Karte und den Daten, die dem oder den mobilen Objekten zugeordnet sind, also zum Beispiel Positionsdaten und/oder Prädiktionsdaten.

Fig. 2 zeigt eine Vorrichtung 201 zum Betreiben eines Fahrzeugs.

Die Vorrichtung 201 umfasst eine Kommunikationsschnittstelle 203, die ausgebildet ist, eine digitale Karte eines Parkplatzes und eine Zielposition auf dem Parkplatz über ein Kommunikationsnetzwerk zu empfangen. Die Kommunikationsschnittstelle 203 ist ferner ausgebildet, Positionsdaten von einem oder mehreren sich innerhalb des Parkplatzes befindenden mobilen Objekten über das Kommunikationsnetzwerk zu empfangen.

Die Vorrichtung 201 umfasst ferner eine Führungseinrichtung 205, die ausgebildet ist, das Fahrzeug autonom auf dem Parkplatz basierend auf der digitalen Karte und auf den Positionsdaten des oder der mobilen Objekte zu der Zielposition zu führen und das Fahrzeug autonom an der Zielposition abzustellen.

In einer anderen Ausführungsform umfasst die Vorrichtung 201 eine Umfeldsensorik für eine sensorische Erfassung oder zum sensorischen Erfassen eines Fahrzeugumfelds. Die Umfeldsensorik umfasst beispielsweise einen oder mehrere Umfeldsensoren.

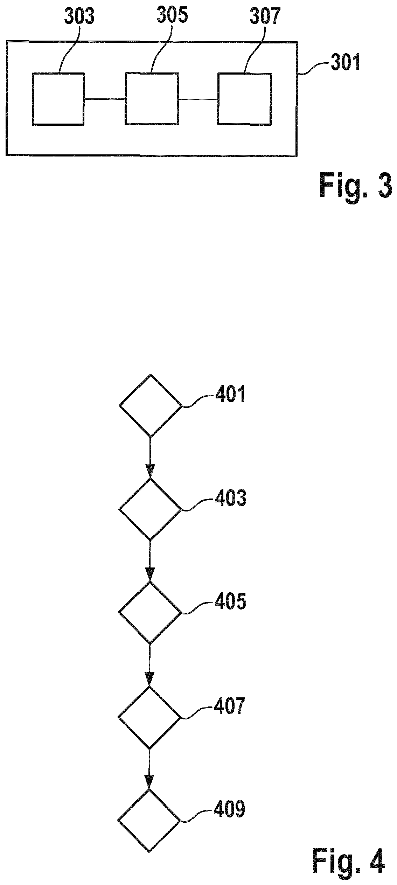

Fig. 3 zeigt eine Vorrichtung 301 zum Betreiben eines Parkplatzes.

Die Vorrichtung 301 umfasst eine fahrzeugexterne Überwachungseinrichtung 303 zum Überwachen des Parkplatzes. Die Vorrichtung 301 umfasst ferner einen Prozessor 305, der ausgebildet ist, basierend auf der Überwachung ein oder mehrere mobile Objekte innerhalb des Parkplatzes zu detektieren, eine Position des oder der mobilen Objekte zu bestimmen und der Position entsprechende Positionsdaten zu ermitteln. Die Vorrichtung 301 umfasst ferner eine Kommunikationsschnittstelle 307, die ausgebildet ist, eine digitale Karte des Parkplatzes und die Positionsdaten über ein Kommunikationsnetzwerk an einen Teilnehmer des Kommunikationsnetzwerks zu senden.

Der Teilnehmer ist beispielsweise die Vorrichtung 201 der Fig. 2 oder ein Endgerät, insbesondere ein mobiles Endgerät, oder das Fahrzeug.

Die Kommunikationsschnittstelle 307 ist vorzugsweise ausgebildet, die digitale Karte und die Positionsdaten an mehrere Teilnehmer zu senden.

In einer Ausführungsform ist die Kommunikationsschnittstelle 307 ausgebildet, von einem Teilnehmer Positionsdaten und/oder Prädiktionsdaten zu empfangen, die einem oder mehreren mobilen Objekten zugeordnet sind. Solche Daten können beispielsweise mittels Fahrzeugen ermittelt und an die Vorrichtung 301 gesendet werden, die auf dem Parkplatz autonom navigieren und hierbei ihr Umfeld sensorisch erfassen.

Basierend auf den empfangenen Prädiktionsdaten und/oder Positionsdaten kann dann der Prozessor 305 eine dynamische Schicht einer digitalen Karte ermitteln oder der Prozessor 305 ermittelt basierend auf diesen Daten eine weitere digitale Karte. Das heißt also, dass der Prozessor 305 entsprechend ausgebildet ist.

Fig. 4 zeigt ein Ablaufdiagramm eines Verfahrens zum Betreiben eines Parkplatzes.

Gemäß einem Schritt 401 wird der Parkplatz überwacht. Dies beispielsweise mittels eines fahrzeugexternen Überwachungssystems. In einem Schritt 403 werden basierend auf der Überwachung ein oder mehrere mobile Objekte innerhalb des Parkplatzes detektiert. In einem Schritt 405 wird eine Position des oder der mobilen Objekte bestimmt. In einem Schritt 407 werden der Position entsprechende Positionsdaten ermittelt. Gemäß einem Schritt 409 ist vorgesehen, dass eine digitale Karte des Parkplatzes die Positionsdaten über ein Kommunikationsnetzwerk an einen Teilnehmer oder an mehrere Teilnehmer des Kommunikationsnetzwerks gesendet werden.

In einer Ausführungsform ist vorgesehen, dass Positionsdaten und/oder Prädiktionsdaten von einem oder von mehreren Teilnehmern des Kommunikationsnetzwerks empfangen werden, wobei basierend auf den empfangenen Daten eine dynamische Schicht einer digitalen Karte oder eine weitere digitale Karte erstellt wird.

Zusammenfassend stellt die vorliegende Erfindung ein technisches und effizientes Konzept bereit, mit der dynamische oder mobile Objekte bei einem vollautomatischen (autonomen) Valet Parking berücksichtigt werden. Der erfindungsgemäße Gedanke hier ist insbesondere, dass die dynamischen Objekte in die digitale Karte des Parkplatzes, beispielsweise des Parkhauses, mit integriert werden, die dann anschließend mittels der Vorrichtung zum Betreiben eines Parkplatzes bereitgestellt werden kann.

Nach einer Ausführungsform ist die Vorrichtung zum Betreiben eines Parkplatzes von einem Parkplatzmanagementsystem oder einem Parkplatzverwaltungssystem umfasst, insbesondere einem Parkhausmanagementsystem oder einem Parkhausverwaltungssystem.

Eine Ausführungsform sieht die Verwendung von unterschiedlichen Layer oder Schichten vor. Ein Layer oder eine Schicht für die statischen Anteile (stationären Objekte) und ein Layer oder Schicht für die dynamischen Anteile (mobilen Objekte). Dadurch reicht es in der Regel aus, dass der statische Layer nur einmal zu den Fahrzeugen übertragen werden muss.

Der dynamische Layer wird nach einer Ausführungsform regelmäßig, also zum Beispiel periodisch, an die Fahrzeuge übermittelt werden. In einer Ausführungsform werden nur die Teile des Layers (also Daten der mobilen Objekte), die das jeweilige Fahrzeug betreffen. Das heißt, dass nach einer Ausführungsform ein Fahrzeug nur diejenigen Informationen über mobile Objekte erhält oder übermittelt bekommt, die für die Navigation dieses Fahrzeugs relevant sind. So muss das Fahrzeug in der Regel keine Informationen über mobile Objekte erhalten, wenn sich diese im 5. Stock eines Parkhauses befinden, das Fahrzeug selbst aber im Erdgeschoss navigiert und dort einparkt.

Alternativ werden nach einer Ausführungsform zwei digitale Karten, eine für die statischen und eine für die dynamischen Anteile, verwendet.

Die dynamische Karte respektive der Layer wird dabei vorzugsweise durch zwei Quellen "gespeist", erhält also seine Daten von zwei Quellen. Einmal durch die Fahrzeuge (zum Beispiels mittels der fahrzeuginternen Umfeldsensorik) und einmal durch ein fahrzeugexternes Überwachungssystem (zum Beispiel unter anderem auf Basis von Videokameras oder des Überwachungssystems) des Parkhaus-/Parkplatzmanagementsystems, allgemein der Vorrichtung zum Betreiben eines Parkplatzes.

Das Überwachungssystem detektiert dabei beispielsweise alle Objekte und deren Bewegungen. Des Weiteren berechnet es vorzugsweise die wahrscheinlichen Bewegungen der Objekte in der Zukunft (Prädiktion).

Die Fahrzeuge übermitteln nach einer Ausführungsform während ihrer Navigation ihre eigenen Bewegungen und die von ihren Sensoren detektierten dynamischen Objekte (Fahrzeuge, Personen, Tiere, ...) an die Vorrichtung zum Betreiben eines Parkplatzes, so dass diese die entsprechenden Daten in die digitale Karte integrieren kann respektive integriert. Die wahrscheinlichen Bewegungen der dynamischen Objekte kann zum Beispiel im Fahrzeug und/oder beispielsweise vom Parkhaus-/Parkplatzmanagementsystem berechnet werden.

Das heißt, die Karte respektive der Layer enthält neben den aktuellen Bewegungen der dynamischen Objekte (Fahrzeuge, Personen, ...) zudem die wahrscheinlichen Bewegungen in der Zukunft.

## Patentansprüche

1. Verfahren zum Betreiben eines Fahrzeugs,
- wobei eine digitale Karte eines Parkplatzes und zumindest eine Zielposition auf dem Parkplatz vom Fahrzeug über ein Kommunikationsnetzwerk empfangen (101) werden,
- wobei Positionsdaten von einem oder mehreren sich innerhalb des Parkplatzes befindenden mobilen Objekten vom Fahrzeug über das Kommunikationsnetzwerk empfangen (103) werden,
- wobei das Fahrzeug autonom auf dem Parkplatz basierend auf der digitalen Karte und auf den Positionsdaten des einen oder der mehreren mobilen Objekte zur der Zielposition navigiert (105) und
- wobei sich das Fahrzeug autonom an der Zielposition abstellt (107), **dadurch gekennzeichnet, dass**
- dem oder den mobilen Objekten zugeordnete Prädiktionsdaten von zukünftigen Bewegungen des oder der mobilen Objekte vom Fahrzeug über das Kommunikationsnetzwerk empfangen werden, so dass das Fahrzeug basierend auf den zukünftigen Bewegungen des oder der mobilen Objekte auf dem Parkplatz autonom navigiert, wobei die dem oder den mobilen Objekten zugeordnete Daten von einer dynamischen Schicht der digitalen Karte umfasst sind, wobei die digitale Karte auch eine statische Schicht aufweist, die Positionsdaten von einem oder mehreren sich innerhalb des Parkplatzes befindenden stationären Objekten umfasst.

2. Verfahren nach Anspruch 1, wobei das Fahrzeug sein Umfeld sensorisch erfasst und bei einer Detektion eines mobilen Objekts basierend auf der sensorischen Erfassung eine Position des mobilen Objekts bestimmt und der Position entsprechende Positionsdaten über das Kommunikationsnetzwerk an einen Teilnehmer des Kommunikationsnetzwerks sendet.

3. Verfahren nach einem der vorherigen Ansprüche, wobei das Fahrzeug während seiner Navigation auf dem Parkplatz seiner momentanen Position entsprechende Positionsdaten über das Kommunikationsnetzwerk an einen Teilnehmer des Kommunikationsnetzwerks sendet.

4. Verfahren nach einem der vorherigen Ansprüche, wobei das Fahrzeug während seiner Navigation auf dem Parkplatz seiner geplanten Route entsprechende Routendaten über das Kommunikationsnetzwerk an einen Teilnehmer des Kommunikationsnetzwerks sendet.

5. Verfahren nach Anspruch 1, wobei die dynamische Schicht mehrere dynamische Subschichten umfasst, wobei eine der Subschichten Daten umfasst, die mobilen Objekten mit einer Geschwindigkeit von 0 m/s zugeordnet sind, wobei eine andere der Subschichten Daten umfasst, die mobilen Objekten mit einer Geschwindigkeit größer 0 m/s zugeordnet sind.

6. Vorrichtung (201) zum Betreiben eines Fahrzeugs, umfassend:
- eine Kommunikationsschnittstelle (203), die ausgebildet ist, eine digitale Karte eines Parkplatzes und eine Zielposition auf dem Parkplatz über ein Kommunikationsnetzwerk zu empfangen,
- wobei die Kommunikationsschnittstelle (203) ferner ausgebildet ist, Positionsdaten von einem oder mehreren sich innerhalb des Parkplatzes befindenden mobilen Objekten über das Kommunikationsnetzwerk zu empfangen, und
- eine Führungseinrichtung (205), die ausgebildet ist, das Fahrzeug autonom auf dem Parkplatz basierend auf der digitalen Karte und auf den Positionsdaten des oder der mobilen Objekte zur der Zielposition zu führen und das Fahrzeug autonom an der Zielposition abzustellen, **dadurch gekennzeichnet, dass**
- die Kommunikationsschnittstelle (203) ferner ausgebildet ist, dem oder den mobilen Objekten zugeordnete Prädiktionsdaten von zukünftigen Bewegungen des oder der mobilen Objekte über das Kommunikationsnetzwerk zu empfangen,
- wobei die Führungseinrichtung (205) ausgebildet ist, das Fahrzeug basierend auf den zukünftigen Bewegungen des oder mobilen Objekte auf dem Parkplatz autonom zu navigieren,
- wobei die dem oder den mobilen Objekten zugeordnete Daten von einer dynamischen Schicht der digitalen Karte umfasst sind, wobei die digitale Karte eine statische Schicht aufweist, die Positionsdaten von einem oder mehreren sich innerhalb des Parkplatzes befindenden stationären Objekten umfasst.

7. Vorrichtung (201) nach Anspruch 6, umfassend ferner eine Umfeldsensorik zum sensorischen Erfassen eines Fahrzeugumfelds und einen Prozessor (205), der ausgebildet ist, basierend auf der sensorischen Erfassung ein mobiles Objekt im Fahrzeugumfeld zu detektieren, eine Position des mobilen Objekts zu bestimmen und der Position entsprechende Positionsdaten zu ermitteln, wobei die Kommunikationsschnittstelle (203) ausgebildet ist, die Positionsdaten über das Kommunikationsnetzwerk an einen Teilnehmer des Kommunikationsnetzwerks zu senden.

8. Vorrichtung (201) nach Anspruch 7, wobei der Prozessor (205) ferner ausgebildet ist, basierend auf der sensorischen Erfassung eine zukünftige Bewegung des mobilen Objekts zu prädizieren und der Prädiktion entsprechende Prädiktionsdaten zu ermitteln, wobei die Kommunikationsschnittstelle (203) ausgebildet ist, die Prädiktionsdaten über das Kommunikationsnetzwerk an einen Teilnehmer des Kommunikationsnetzwerks zu senden.

9. Vorrichtung (301) zum Betreiben eines Parkplatzes, umfassend:
- eine fahrzeugexterne Überwachungseinrichtung (303) zum Überwachen des Parkplatzes,
- einen Prozessor (305), der ausgebildet ist, basierend auf der Überwachung ein oder mehrere mobile Objekte innerhalb des Parkplatzes zu detektieren, eine Position des oder der mobilen Objekte zu bestimmen und der Position entsprechende Positionsdaten zu ermitteln, **gekennzeichnet durch**
- eine Kommunikationsschnittstelle (307), die ausgebildet ist, eine digitale Karte des Parkplatzes und die Positionsdaten über ein Kommunikationsnetzwerk an einen Teilnehmer des Kommunikationsnetzwerks zu senden,
- wobei der Prozessor (305) ausgebildet ist, basierend auf der Überwachung eine zukünftige Bewegung des oder der mobilen Objekte zu prädizieren und der Prädiktion entsprechende Prädiktionsdaten zu ermitteln, wobei die Kommunikationsschnittstelle (307) ausgebildet ist, die Prädiktionsdaten über das Kommunikationsnetzwerk an den Teilnehmer des Kommunikationsnetzwerks zu senden
- wobei der Prozessor (305) ausgebildet ist, die dem oder den mobilen Objekten zugeordnete Daten als dynamische Schicht in die digitale Karte zu integrieren, wobei die digitale Karte eine statische Schicht aufweist, die Positionsdaten von einem oder mehreren sich innerhalb des Parkplatzes befindenden stationären Objekten umfasst und wobei die Kommunikationsschnittstelle (307) ausgebildet ist, die dynamische Schicht getrennt von der statischen Schicht über das Kommunikationsnetzwerk an den Teilnehmer des Kommunikationsnetzwerks zu senden.

10. Vorrichtung (301) nach Anspruch 9, wobei die Kommunikationsschnittstelle (307) ausgebildet ist, Positionsdaten von einem oder mehreren sich innerhalb des Parkplatzes befindenden mobilen Objekten über das Kommunikationsnetzwerk zu empfangen.

11. Vorrichtung (301) nach einem der Ansprüche 9 oder 10, wobei die Kommunikationsschnittstelle (307) ausgebildet ist, während einer autonomen Navigation eines den Teilnehmer des Kommunikationsnetzwerks umfassenden Fahrzeugs auf dem Parkplatz ausschließlich dem oder den mobilen Objekten zugeordnete Daten an den Teilnehmer über das Kommunikationsnetzwerk zu senden.

12. Verfahren zum Betreiben eines Parkplatzes,
- wobei der Parkplatz überwacht (401) wird,
- basierend auf der Überwachung ein oder mehrere mobile Objekte innerhalb des Parkplatzes detektiert (403), eine Position des oder der mobilen Objekte bestimmt (405) und der Position entsprechende Positionsdaten ermittelt (407) werden,
- wobei eine digitale Karte des Parkplatzes und die Positionsdaten über ein Kommunikationsnetzwerk an einen Teilnehmer des Kommunikationsnetzwerks gesendet (409) werden, **dadurch gekennzeichnet, dass**
- basierend auf der Überwachung eine zukünftige Bewegung des oder der mobilen Objekte prädiziert wird, wobei der Prädiktion entsprechende Prädiktionsdaten ermittelt werden,
- wobei die Prädiktionsdaten über das Kommunikationsnetzwerk an den Teilnehmer des Kommunikationsnetzwerks gesendet werden
- wobei die dem oder den mobilen Objekten zugeordnete Daten von einer dynamischen Schicht der digitalen Karte umfasst sind, wobei die digitale Karte eine statische Schicht aufweist, die Positionsdaten von einem oder mehreren sich innerhalb des Parkplatzes befindenden stationären Objekten umfasst.

13. Computerprogramm, umfassend Programmcode zur Durchführung des Verfahrens nach einem der Ansprüche 1 bis 5 und/oder 12, wenn das Computerprogramm auf einem Computer ausgeführt wird.

## Claims

1. Method for operating a vehicle,
- wherein a digital map of a car park and at least one target position in the car park are received (101) by the vehicle via a communication network,
- wherein position data from one or more mobile objects located within the car park are received (103) by the vehicle via the communication network,
- wherein the vehicle navigates (105) to the target position autonomously in the car park on the basis of the digital map and the position data from the one or more mobile objects, and
- wherein the vehicle parks (107) autonomously in the target position,
**characterized in that**
- prediction data associated with the mobile object(s) for future movements of the mobile object(s) are received by the vehicle via the communication network, with the result that the vehicle autonomously navigates on the basis of the future movements of the mobile object(s) in the car park, the data associated with the mobile object(s) being included in a dynamic layer of the digital map, the digital map also comprising a static layer that includes position data from one or more stationary objects located within the car park.

2. Method according to Claim 1, wherein the vehicle captures its surroundings by sensor and, in the event of detection of a mobile object on the basis of the sensor capture, determines a position of the mobile object and transmits position data corresponding to the position to a subscriber in the communication network via the communication network.

3. Method according to either of the preceding claims, wherein, while navigating in the car park, the vehicle transmits position data corresponding to its current position to a subscriber in the communication network via the communication network.

4. Method according to one of the preceding claims, wherein, while navigating in the car park, the vehicle transmits route data corresponding to its planned route to a subscriber in the communication network via the communication network.

5. Method according to Claim 1, wherein the dynamic layer includes multiple dynamic sublayers, one of the sublayers including data associated with mobile objects having a velocity of 0 m/s, another of the sublayers including data associated with mobile objects having a velocity of greater than 0 m/s.

6. Apparatus (201) for operating a vehicle, comprising:
- a communication interface (203) designed to receive a digital map of a car park and a target position in the car park via a communication network,
- wherein the communication interface (203) is further designed to receive position data from one or more mobile objects located within the car park via the communication network, and
- a guidance device (205) designed to guide the vehicle to the target position autonomously in the car park on the basis of the digital map and the position data from the mobile object(s) and to park the vehicle autonomously in the target position,
**characterized in that**
- the communication interface (203) is further designed to receive prediction data associated with the mobile object(s) for future movements of the mobile object(s) via the communication network,
- wherein the guidance device (205) is designed to autonomously navigate the vehicle on the basis of the future movements of the mobile object(s) in the car park,
- wherein the data associated with the mobile object(s) are included in a dynamic layer of the digital map, the digital map comprising a static layer that includes position data from one or more stationary objects located within the car park.

7. Apparatus (201) according to Claim 6, further comprising a surroundings sensor system for capturing vehicle surroundings by sensor and a processor (205) designed to take the sensor capture as a basis for detecting a mobile object in the vehicle surroundings, determining a position of the mobile object and identifying position data corresponding to the position, the communication interface (203) being designed to transmit the position data to a subscriber in the communication network via the communication network.

8. Apparatus (201) according to Claim 7, wherein the processor (205) is further designed to take the sensor capture as a basis for predicting a future movement of the mobile object and identifying prediction data corresponding to the prediction, the communication interface (203) being designed to transmit the prediction data to a subscriber in the communication network via the communication network.

9. Apparatus (301) for operating a car park, comprising:
- a vehicle-external monitoring device (303) for monitoring the car park,
- a processor (305) designed to take the monitoring as a basis for detecting one or more mobile objects within the car park, determining a position of the mobile object(s) and identifying position data corresponding to the position, **characterized by**
- a communication interface (307) designed to transmit a digital map of the car park and the position data to a subscriber in a communication network via the communication network,
- wherein the processor (305) is designed to take the monitoring as a basis for predicting a future movement of the mobile object(s) and identifying prediction data corresponding to the prediction, the communication interface (307) being designed to transmit the prediction data to the subscriber in the communication network via the communication network,
- wherein the processor (305) is designed to integrate the data associated with the mobile object(s) into the digital map as a dynamic layer, the digital map comprising a static layer that includes position data from one or more stationary objects located within the car park, and the communication interface (307) being designed to transmit the dynamic layer separately from the static layer to the subscriber in the communication network via the communication network.

10. Apparatus (301) according to Claim 9, wherein the communication interface (307) is designed to receive position data from one or more mobile objects located within the car park via the communication network.

11. Apparatus (301) according to either of Claims 9 and 10, wherein the communication interface (307) is designed so as, while a vehicle comprising the subscriber in the communication network is autonomously navigating in the car park, to transmit exclusively data associated with the mobile object(s) to the subscriber via the communication network.

12. Method for operating a car park,
- wherein the car park is monitored (401),
- the monitoring is taken as a basis for detecting (403) one or more mobile objects within the car park, determining (405) a position of the mobile object(s) and identifying (407) position data corresponding to the position,
- wherein a digital map of the car park and the position data are transmitted (409) to a subscriber in a communication network via the communication network, **characterized in that**
- the monitoring is taken as a basis for predicting a future movement of the mobile object(s), with prediction data corresponding to the prediction being identified,
- wherein the prediction data are transmitted to the subscriber in the communication network via the communication network,
- wherein the data associated with the mobile object(s) are included in a dynamic layer of the digital map, the digital map comprising a static layer that includes position data from one or more stationary objects located within the car park.

13. Computer program comprising program code for carrying out the method according to one of Claims 1 to 5 and/or 12 when the computer program is executed on a computer.

## Revendications

1. Procédé d'exploitation d'un véhicule,
- dans lequel une carte numérique d'une aire de stationnement et au moins une position cible sur l'aire de stationnement sont reçues (101) par le véhicule par l'intermédiaire d'un réseau de communication,
- dans lequel des données de position d'un ou de plusieurs objets mobiles se trouvant à l'intérieur de l'aire de stationnement sont reçues (103) par le véhicule par l'intermédiaire du réseau de communication,
- dans lequel le véhicule se déplace (105) de manière autonome sur l'aire de stationnement jusqu'à la position cible sur la base de la carte numérique et des données de position du un ou des plusieurs objets mobiles, et
- dans lequel le véhicule se gare (107) de manière autonome à la position cible,
**caractérisé en ce que**
- des données de prédiction associées à l'objet mobile ou aux objets mobiles concernant des mouvements futurs du ou des objets mobiles sont reçues par le véhicule par l'intermédiaire du réseau de communication de sorte que le véhicule se déplace de manière autonome sur l'aire de stationnement sur la base des mouvements futurs du ou des objets mobiles, les données associées à l'objet mobile ou aux objets mobiles étant comprises dans une couche dynamique de la carte numérique, la carte numérique présentant également une couche statique qui comprend des données de position d'un ou de plusieurs objets stationnaires se trouvant à l'intérieur de l'aire de stationnement.

2. Procédé selon la revendication 1, dans lequel le véhicule détecte son environnement par des capteurs, et en cas de détection d'un objet mobile sur la base de la détection par capteurs, détermine une position de l'objet mobile et envoie des données de position correspondant à la position par l'intermédiaire du réseau de communication à un abonné du réseau de communication.

3. Procédé selon l'une quelconque des revendications précédentes, dans lequel le véhicule envoie pendant ses déplacements sur l'aire de stationnement des données de position correspondant à sa position actuelle par l'intermédiaire du réseau de communication à un abonné du réseau de communication.

4. Procédé selon l'une quelconque des revendications précédentes, dans lequel le véhicule envoie pendant ses déplacements sur l'aire de stationnement des données d'itinéraire correspondant à son itinéraire prévu par l'intermédiaire du réseau de communication à un abonné du réseau de communication.

5. Procédé selon la revendication 1, dans lequel la couche dynamique comprend plusieurs sous-couches dynamiques, l'une des sous-couches comprenant des données qui sont associées à des objets mobiles ayant une vitesse de 0 m/s, une autre des sous-couches comprenant des données qui sont associées à des objets mobiles ayant une vitesse supérieure à 0 m/s.

6. Dispositif (201) d'exploitation d'un véhicule, comprenant :
- une interface de communication (203) qui est réalisée pour recevoir une carte numérique d'une aire de stationnement et une position cible sur l'aire de stationnement par l'intermédiaire d'un réseau de communication,
- l'interface de communication (203) étant en outre réalisée pour recevoir par l'intermédiaire du réseau de communication des données de position d'un ou de plusieurs objets mobiles se trouvant à l'intérieur de l'aire de stationnement, et
- un dispositif de guidage (205) qui est réalisé pour guider le véhicule de manière autonome sur l'aire de stationnement sur la base de la carte numérique et des données de position du ou des objets mobiles jusqu'à la position cible, et pour garer le véhicule de manière autonome à la position cible,
**caractérisé en ce que**
- l'interface de communication (203) est en outre réalisée pour recevoir par l'intermédiaire du réseau de communication des données de prédiction associées à l'objet mobile ou aux objets mobiles concernant des mouvements futurs du ou des objets mobiles,
- le dispositif de guidage (205) étant réalisé pour déplacer le véhicule de manière autonome sur l'aire de stationnement sur la base des mouvements futurs du ou des objets mobiles,
- les données associées à l'objet mobile ou aux objets mobiles étant comprises dans une couche dynamique de la carte numérique, la carte numérique présentant une couche statique qui comprend les données de position d'un ou de plusieurs objets stationnaires se trouvant à l'intérieur de l'aire de stationnement.

7. Dispositif (201) selon la revendication 6, comprenant en outre un système de capteurs d'environnement servant à la détection par capteurs d'un environnement de véhicule et un processeur (205) qui est réalisé pour détecter sur la base de la détection par capteurs un objet mobile dans l'environnement de véhicule, pour déterminer une position de l'objet mobile et pour établir des données de position correspondant à la position, l'interface de communication (203) étant réalisée pour envoyer les données de position par l'intermédiaire du réseau de communication à un abonné du réseau de communication.

8. Dispositif (201) selon la revendication 7, dans lequel le processeur (205) est en outre réalisé pour prédire sur la base de la détection par capteurs un mouvement futur de l'objet mobile et pour établir des données de prédiction correspondant à la prédiction, l'interface de communication (203) étant réalisée pour envoyer les données de prédiction par l'intermédiaire du réseau de communication à un abonné du réseau de communication.

9. Dispositif (301) d'exploitation d'une aire de stationnement, comprenant :
- un dispositif de surveillance externe au véhicule (303) servant à surveiller l'aire de stationnement,
- un processeur (305) qui est réalisé pour détecter sur la base de la surveillance un ou plusieurs objets mobiles à l'intérieur de l'aire de stationnement, pour déterminer une position du ou des objets mobiles, ou pour établir des données de position correspondant à la position,
**caractérisé par**
- une interface de communication (307) qui est réalisée pour envoyer une carte numérique de l'aire de stationnement et les données de position par l'intermédiaire du réseau de communication à un abonné du réseau de communication,
- le processeur (305) étant réalisé pour prédire sur la base de la surveillance un mouvement futur du ou des objets mobiles, et pour établir des données de prédiction correspondant à la prédiction, l'interface de communication (307) étant réalisée pour envoyer les données de prédiction à l'abonné du réseau de communication, par l'intermédiaire du réseau de communication,
- le processeur (305) étant réalisé pour intégrer les données associées à l'objet mobile ou aux objets mobiles sous la forme d'une couche dynamique dans la carte numérique, la carte numérique présentant une couche statique qui comprend des données de position d'un ou de plusieurs objets stationnaires se trouvant à l'intérieur de l'aire de stationnement, et l'interface de communication (307) étant réalisée pour envoyer la couche dynamique séparément de la couche statique à l'abonné du réseau de communication, par l'intermédiaire du réseau de communication.

10. Dispositif (301) selon la revendication 9, dans lequel l'interface de communication (307) est réalisée pour recevoir par l'intermédiaire du réseau de communication des données de position d'un ou de plusieurs objets mobiles se trouvant à l'intérieur de l'aire de stationnement.

11. Dispositif (301) selon l'une quelconque des revendications 9 ou 10, dans lequel l'interface de communication (307) est réalisée pour envoyer pendant des déplacements autonomes d'un véhicule comprenant l'abonné du réseau de communication sur l'aire de stationnement exclusivement des données associées à l'objet mobile ou aux objets mobiles à l'abonné, par l'intermédiaire du réseau de communication.

12. Procédé d'exploitation d'une aire de stationnement,
- dans lequel l'aire de stationnement est surveillée (401),
- sur la base de la surveillance, un ou plusieurs objets mobiles sont détectés (403) à l'intérieur de l'aire de stationnement, une position du ou des objets mobiles est déterminée (405) et des données de position correspondant à la position sont établies (407),
- une carte numérique de l'aire de stationnement et les données de position étant envoyées (409) par l'intermédiaire du réseau de communication à un abonné du réseau de communication,
**caractérisé en ce que**
- sur la base de la surveillance, un mouvement futur du ou des objets mobiles est prédit, des données de prédiction correspondant à la prédiction étant établies,
- dans lequel les données de prédiction sont envoyées par l'intermédiaire du réseau de communication à l'abonné du réseau de communication,
- les données associées à l'objet mobile ou aux objets mobiles étant comprises dans une couche dynamique de la carte numérique, la carte numérique présentant une couche statique qui comprend des données de position d'un ou de plusieurs objets stationnaires se trouvant à l'intérieur de l'aire de stationnement.

13. Programme informatique, comprenant du code programme pour exécuter le procédé selon l'une quelconque des revendications 1 à 5 et/ou 12 lorsque le programme informatique est exécuté sur un ordinateur.
